# FASCICULE DE BREVET EUROPEEN

(11) **EP 3 648 863 B1**
(45) Date de publication et mention de la délivrance du brevet: **16.08.2023**
(21) Numéro de dépôt: 18733606.0
(22) Date de dépôt: 25.06.2018
(51) Int. Cl.: B01D 21/01, B01D 21/24, B03D 3/06, C02F 1/52, B01D 21/00, B01D 21/08

(54) **INSTALLATION POUR LE TRAITEMENT DES EAUX PAR FLOCULATION LESTÉE ET DÉCANTATION INTÉGRÉES ET PROCÉDÉ CORRESPONDANT**
WASSERBEHANDLUNGSANLAGE MIT INTEGRIERTER BALLASTFLOCKUNG UND DEKANTIERUNG SOWIE ENTSPRECHENDES VERFAHREN
WATER TREATMENT PLANT HAVING INTEGRATED BALLASTED FLOCCULATION AND DECANTATION, AND A CORRESPONDING METHOD

(30) Priorité: 06.07.2017 FR 1756399
(43) Date de publication de la demande: 13.05.2020
(73) Titulaire: Veolia Water Solutions & Technologies Support, 94417 Saint-Maurice Cedex (FR)
(72) Inventeur: GAID, Abdelkader, 75014 Paris (FR); PAILLARD, Hervé, 86340 Vernon (FR); SAUVIGNET, Philippe, 35460 Saint Etienne en Cogles (FR)
(74) Mandataire: Vidon Brevets & Stratégie
(86) Numéro de dépôt international: PCT/EP2018/066988
(87) Numéro de publication internationale: WO 2019/007745

(56) Documents cités:
- EP-A1- 0 932 436
- EP-B1- 0 932 436
- WO-A1-01/40121
- WO-A1-98/32702
- WO-A1-2006/097650
- WO-A1-2012/107704
- GB-A- 1 398 603
- US-A1- 2016 145 126

## Description

### Domaine de l'invention

L'invention concerne le domaine de traitement des eaux par voie physico-chimique.

Plus précisément, l'invention concerne une technique visant à traiter les eaux contaminées, telles que les eaux à potabiliser, les eaux usées municipales et industrielles, l'eau de pluie ou l'eau de mer, à abattre la teneur en matières en suspension de telles eaux, ainsi que le cas échéant leur turbidité, leur concentration en algues, leur teneur en matières organiques ainsi que leur couleur.

L'invention trouve notamment son application dans le cadre du traitement d'eau en vue de sa potabilisation, mais aussi dans le cadre du traitement d'eaux usées municipales ou industrielles en vue de leur épuration.

### Art antérieur

Parmi les techniques de traitement des eaux par voie physico-chimique connues de l'homme de l'art, celles mettant en oeuvre une étape de coagulation, une étape de floculation et une étape de décantation des flocs sont très communément utilisées.

Afin d'accroitre les performances de ces techniques, l'étape de floculation est assistée par adjonction d'un matériau lestant. En pratique, la décantation à flocs lestés consiste à ajouter un lest, par exemple du micro-sable, lors de l'étape de floculation afin d'augmenter la densité des flocs et d'accélérer la vitesse de décantation. Le lest est en général recyclé après sa séparation des boues de décantation. Le document EP 0 932 436 montre un système dans lequel les étapes de floculation et de décantation sont effectuées dans une cuve unique.

On connaît ainsi par le brevet FR2627704B1 un procédé de traitement d'eau comprenant une étape de coagulation, une étape de floculation lestée et une étape de séparation de flocs par décantation. Cette technique inclut un recyclage du lest effectué par hydrocyclonage des boues.

Un tel procédé permet d'abattre les matières organiques contenues dans les eaux, mais il nécessite de prévoir un réacteur de coagulation, un réacteur de floculation et un décanteur. L'emprise au sol des installations correspondantes est donc élevée alors que ces installations sont souvent appelées à être à proximité des effluents, non loin ou en milieu urbain où l'espace disponible pour ce type d'installation est restreint et cher.

En conséquence, il existe un réel besoin pour réduire l'emprise au sol de ces installations de traitement des eaux.

Par ailleurs, dans les installations du type de celles décrites dans FR267704B1, il est nécessaire de racler en continu les boues décantées et, dans certains cas, de les pousser dans une trémie pour les extraire. L'utilisation de racleurs, et le cas échéant de trémies, complexifie la réalisation de ces installations et augmente leur coût.

Un autre inconvénient des installations de l'art antérieur réside dans le fait que les hydrocyclones mis en oeuvre pour le recyclage du lest sont de forts consommateurs d'énergie. En plus, leur efficacité décroît avec le diamètre des particules à séparer, ce qui peut induire des pertes de lest pouvant être importantes. Il existe donc un réel besoin pour améliorer la performance de recyclage du lest dans ce type de procédé.

### Objectifs de l'invention

L'invention a pour objectif de proposer une installation pour le traitement des eaux par floculation et décantation à flocs lestés palliant au moins certains des inconvénients de l'art antérieur cités ci-dessus.

Notamment, un objectif de la présente invention est de proposer une telle installation pouvant présenter une emprise au sol moindre que les installations de l'art antérieur, à capacités de traitement équivalentes.

Encore un autre objectif de la présente invention est de proposer une telle installation dont l'utilisation implique une amélioration des performances de séparation liquide-solide.

Encore un autre objectif de la présente invention est de proposer une telle installation qui puisse s'adapter à différents débits de traitement et/ou différentes qualités des eaux à traiter.

Encore un autre objectif de la présente invention est de décrire une telle installation qui permette de lutter contre la fuite de lest lors du recyclage de celui-ci.

Encore un autre objectif de la présente invention est de proposer un procédé mettant en oeuvre une telle installation de traitement des eaux.

### Exposé de l'invention

Tout ou partie de ces objectifs sont atteints grâce à l'invention qui concerne une installation pour le traitement des eaux comprenant :
des moyens d'amenée d'eau préalablement coagulées à traiter,
un dispositif de floculation-décantation pourvu de moyens de distribution d'au moins un réactif floculant, de moyens de distribution d'au moins un lest, de moyens d'extraction de boues de décantation ,
des moyens d'évacuation d'eau traitée,
des moyens de séparation dudit lest contenu dans les boues lestées,
et des moyens de recyclage dudit lest ainsi nettoyé vers ledit dispositif de floculation-décantation ,
caractérisée en ce que :
   ledit dispositif de floculation-décantation comprend une cuve unique dans la partie inférieure de laquelle est disposé un agitateur;
   ladite cuve unique est pourvue dans sa partie supérieure de lamelles ;
   lesdites lamelles sont séparées dudit agitateur d'une distance « d » comprise entre environ 0.5 mètre et environ 3 mètres.

Les eaux à traiter sont des eaux préalablement coagulées soit par injection de coagulant dans la canalisation d'amenée des eaux, soit dans un réacteur prévu en amont de l'installation.

Lors de la mise en oeuvre d'une telle installation, la floculation et la décantation des eaux sont intégrées en ce sens qu'elles sont effectuées dans un même compartiment, à savoir la cuve unique accueillant l'agitateur.

Par rapport aux installations de l'art antérieur, dans lesquelles la floculation est effectuée dans une cuve et la décantation dans une autre, l'emprise au sol de l'installation selon l'invention est donc plus faible. Le dispositif de floculation-décantation selon l'invention permet ainsi de regrouper lors de sa mise en oeuvre l'étape de floculation lestée et l'étape de décantation, et ainsi de réduire significativement la taille de l'installation nécessaire à cette mise en oeuvre.

Lors de l'utilisation d'une telle installation, la floculation se produit dans la partie inférieure de la cuve équipée de l'agitateur. Dans cette partie, l'agitateur met en contact intime le lest, le polymère et l'eau coagulée, ce qui conduit à la formation d'agrégats (flocs) alourdis par le lest.

La séparation entre ces flocs et les eaux se produit quant à elle dans la zone entre les pales de l'agitateur et les lamelles. La distance « d » séparant ces deux éléments, comprise selon l'invention entre environ 0.5 mètre et environ 3 mètres, est conçue pour créer lors de la mise en oeuvre de l'installation, une zone dans laquelle les eaux ne sont pas ou très peu agitées par l'agitateur. Cette zone tranquille est propice à la séparation de la matière solide, constituée par le lest et les boues, du reste des eaux. La distance « d » est ici entendue comme la distance entre le plan horizontal accueillant le bord inférieur des lamelles et le plan horizontal accueillant la partie supérieure de l'agitateur (hors arbre vertical et moteur).

Toujours selon l'invention la cuve est pourvue dans sa partie supérieure de lamelles montées parallèles entre elles, fixes ou rotatives. De préférence, ces lamelles sont inclinées d'un angle formé par les lamelles et le plan horizontal compris entre 15° et 60°. Ces lamelles permettent de créer une barrière physique vis à vis des particules fines n'ayant pas floculé et de générer une perte de charge assurant une répartition équitable entre les ouvertures du pack lamellaire. De préférence, ces lamelles sont organisées en un pack lamellaire dont la hauteur H est comprise entre 0,3 mètre et 1,4 mètre.

On notera que l'installation selon l'invention ne nécessite pas de racleur des boues dans la partie inférieure de la cuve.

En pratique, le lest est choisi parmi du sable, du micro-sable, du grenat, de l'ilménite, et tout autre matériau granulaire ayant une densité réelle supérieure à 2,3 tonnes/m³. L'ajout d'un tel lest permet ainsi d'augmenter la densité des flocs et d'accélérer sa vitesse de décantation. On entend par « boues lestées » les boues de décantation mélangées au lest.

Selon une variante de l'installation de l'invention, lesdits moyens de séparation dudit lest contenu dans lesdites boues lestées incluent une pompe et un dispositif de séparation, ladite pompe étant apte à amener lesdites boues lestées à l'intérieur dudit dispositif de séparation.

Selon une autre variante, ces moyens incluent des moyens d'injection d'air dans lesdites boues lestées et un dispositif de séparation.

De tels moyens d'injection d'air constituent un *air lift* par injection de bulles d'air dans une canalisation verticale d'évacuation des boues lestées. Un tel *air lift* permet de favoriser l'entrainement du lest grâce aux bulles et de nettoyer le lest grâce aux mouvements créés par les bulles générant une abrasion de l'agglomérat formé autour de celui-ci ce qui permet de séparer le lest du reste des boues.

Préférentiellement, ledit dispositif de séparation de boues et du lest comprend un mélangeur à pales ou organe similaire tournant à grande vitesse associé à un décanteur de petite taille. Le mélangeur à grande vitesse permet la dissociation du lest du reste des boues éventuellement déjà commencée lors du transport des boues lestées vers le dispositif de séparation par l'air lift. Le décanteur de petite taille permet de recueillir dans sa partie inférieure le lest et dans sa partie supérieure les boues flottantes. La flottation des boues peut être améliorée en prévoyant une injection de fluide tel que de l'air. Ces boues, séparées du lest, sont extraites vers un traitement spécifique.

L'agitateur équipant la cuve unique pourra être constitué sous différentes formes. Ainsi, il comprend avantageusement des pales montées rotatives sur un axe vertical. Selon un mode particulièrement intéressant, ledit agitateur comprend de plus un guide-flux cylindrique disposé autour desdites pales.

Ainsi, lorsqu'un tel agitateur est mis en oeuvre, les eaux circulent à l'intérieur du tube guide-flux du haut vers le bas, et à l'extérieur de celui-ci du bas vers le haut. Cela permet d'optimiser le mélange des eaux avec le floculant et le lest.

Selon une autre variante intéressante de l'invention, ledit agitateur comprend de plus un obstacle statique placé en fond de cuve globalement centré autour dudit axe dans le prolongement de l'agitateur, ledit obstacle statique ayant une surface externe présentant, dans un plan passant par l'axe, une dimension transversale externe qui croit lorsque l'on s'éloigne des pales parallèlement audit axe, avec une pente par rapport à cet axe qui est constante ou croissante. Le mélange est entraîné suivant cet axe vers l'obstacle statique imposant des trajectoires globalement en forme de U ce qui permet à l'eau de remonter vers la zone tranquille. L'obstacle statique permet aussi aux flocs lestés qui décantent de se déposer dans les angles.

L'invention concerne également un procédé de traitement des eaux mettant en oeuvre l'installation décrite ci-dessus, ledit procédé comprenant une étape de coagulation, une étape de floculation lestée, une étape de décantation et une étape de séparation et de recyclage du lest vers ladite étape de floculation lestée, et étant caractérisé en ce que ladite étape de floculation lestée et ladite étape de décantation sont effectuées dans ladite cuve unique.

Préférentiellement, le procédé comprend les étapes selon lesquelles :
un floculant et un lest sont ajoutés aux eaux préalablement coagulées au sein de la cuve unique ;
les eaux coagulées, le lest et le floculant sont mélangés dans la partie inférieure de la cuve unique équipée de l'agitateur ;
une zone tranquille non agitée est ménagée dans la partie supérieure de la cuve unique, entre l'agitateur et le pack lamellaire, zone propice à la décantation des flocs formés;
les eaux traitées sont évacuées par lesdits moyens d'évacuation d'eau traitée prévus dans la partie haute de ladite cuve après avoir transité par lesdites lamelles ;
les boues sont évacuées par lesdits moyens d'évacuation de boues lestées ; et,
de l'air est injecté dans lesdites boues de façon à en extraire le lest qu'elles contiennent et à le nettoyer sans hydrocyclonage ;
le lest nettoyé est recyclé vers la cuve unique et les boues sont extraites.

Le procédé, selon l'invention ne met donc pas en oeuvre d'étape d'hydrocyclonage. Ceci permet de réduire la consommation d'énergie nécessaire à la séparation et de réduire la fuite de matériau en lest.

Préférentiellement, le temps de séjour des eaux à l'intérieur de ladite cuve intérieure est compris entre 2 minutes et 30 minutes. Ce temps de séjour dépendra de la nature des eaux à traiter mais aussi de la nature du lest utilisé.

### Liste des figures

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- La figure 1 représente, de façon schématique un exemple de mode de réalisation d'une installation selon l'invention ; et
- La figure 2 est un dessin de l'agitateur de l'installation selon la figure 1.

### Description d'un mode de réalisation de l'invention

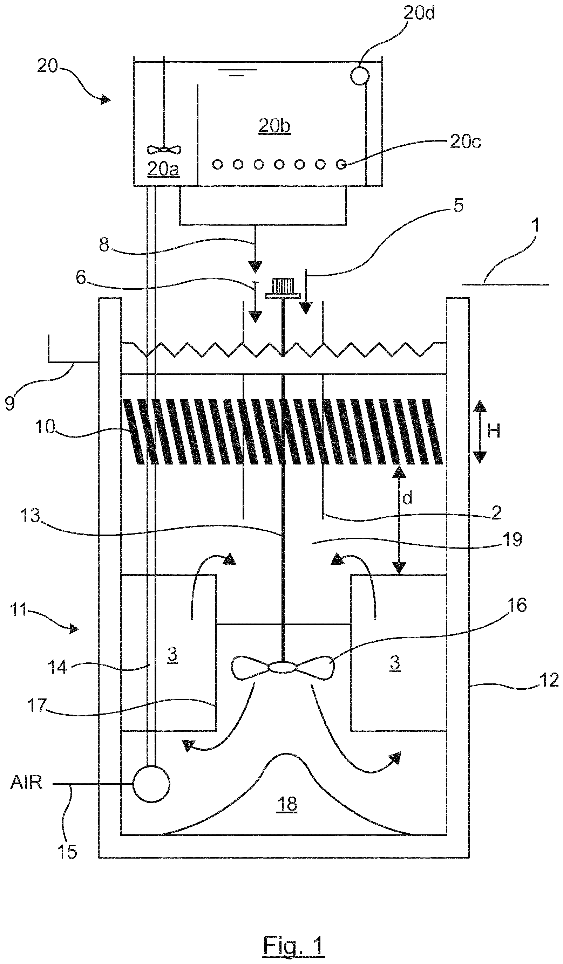

En référence à la figure 1, l'installation selon l'invention comprend des moyens d'amenée 1 d'eau à traiter qui a été préalablement coagulée par addition d'un réactif coagulant. La coagulation de l'eau pourra être effectuée dans un réacteur de coagulation équipée de moyens de distribution d'un réactif coagulant ainsi que d'un moyen d'agitation constitué par un agitateur à pales monté mobile en rotation autour d'un axe vertical. Cette coagulation pourra aussi être effectuée en ligne en injectant un réactif coagulant dans une canalisation d'amenée d'eau brute à traiter.

En pratique, le réactif coagulant peut être organique ou minéral. Il sera avantageusement choisi parmi le sulfate d'aluminium, l'aluminate de sodium, le chlorure ferrique, le sulfate ferrique, le sulfate ferreux, les polyamines (épichlorhydrine ou Polydadmac ^{®}), les résines mélamine-formol, les polyéthylenimines ainsi que certains polymères végétaux cationisés.

L'installation comprend par ailleurs un dispositif de floculation-décantation 11 comprenant une unique cuve 12 équipée d'un agitateur 13. Cette cuve 12 est équipée dans sa partie centrale d'un tube 2 qui recueille les eaux coagulées amenées par les moyens 1 afin de les acheminer dans la partie inférieure de la cuve 2 au-dessus de l'agitateur 13.

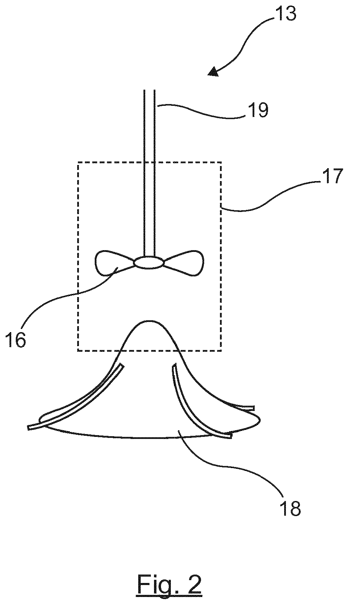

Cet agitateur 13 comprend des pales 16 montées mobiles en rotation autour d'un axe vertical 19. En référence également à la figure 2, l'agitateur 13 comprend aussi un guide-flux 17 cylindrique constitué par une section de tube, et un obstacle statique 18 centré autour de l'axe 19. Cet obstacle 18 présente une forme grossièrement pyramidale. Le tube guide flux est maintenu en place autour des pales grâce à quatre cloisons verticales 3, dont deux sont visibles sur la figure 1, le fixant aux parois latérales de la cuve 12 et utilisées pour améliorer l'écoulement hydraulique.

L'installation comprend de plus des moyens de distribution 5 d'un réactif floculant dans le tube 2 de la cuve 12. A tire d'exemple, le réactif floculant pourra être choisi parmi des polymères hydrosolubles d'origine animale ou végétale, et des polyélectrolytes hydrosolubles de haut poids moléculaire et de différentes ionicités.

L'installation comprend de plus des moyens de distribution 6 d'un lest dans le tube 2 de la cuve 12. Selon l'invention, ce lest est constitué par un matériau en poudre ou en grains qui présente une densité réelle supérieure à 2,3 tonnes par mètre cube. Il s'agit préférentiellement de sable, de poudre de grenat ou de poudre d'ilménite.

La partie supérieure de la cuve 12 est par ailleurs équipée d'un pack lamellaire constitué par des lamelles 10 inclinées. Ce pack lamellaire peut présenter avantageusement une hauteur H comprise entre 0,3 m et 1,4 m. La partie inférieure de ce pack est prévue à une distance « d » de l'agitateur qui pourra varier en pratique, selon les modes de réalisation, entre 0.5 m et 3 m. Cette distance « d » est celle entre le plan horizontal accueillant la partie supérieure de l'agitateur (hors axe 19), ici la partie supérieure du guide-flux 17 cylindrique, et le plan horizontal accueillant l'extrémité inférieure des lamelles du pack lamellaire 10.

Des moyens d'évacuation 9 des eaux traitées incluant une goulotte sont prévus en partie supérieure de la cuve 12.

L'installation comprend par ailleurs une canalisation d'évacuation 14 verticale des boues, ladite canalisation 14 étant prévue à l'intérieur de la cuve 12.

L'installation comprend également des moyens de séparation dudit lest contenu dans lesdites boues lestées suivis de moyens de recyclage 8 dudit lest ainsi nettoyé vers ledit dispositif de floculation-décantation.

A titre d'exemple, lesdits moyens de séparation incluent des moyens d'injection 15 d'air sous forme de bulles dans la canalisation 14, permettant la formation d'un *air lift,* et un dispositif de séparation 20 du lest contenu dans les boues acheminées par cet air lift. Le dispositif de séparation, dans lequel arrive la canalisation 14, est équipé d'un mélangeur 20a à pales tournant à grande vitesse suivie suivi d'un décanteur de petite taille 20b équipée d'une rampe d'injection d'air 20c et d'une goulotte d'évacuation 20d des boues flottées.

L'utilisation d'un *air lift* permet non seulement d'acheminer les boues vers le dispositif de séparation mais aussi d'amorcer la séparation du lest qu'elles contiennent et ainsi de réduire la perte du lest causée par la séparation.

Selon l'invention, les moyens de séparation n'incluent pas d'hydrocyclone.

Le fonctionnement d'une telle installation va maintenant être décrit.

Les eaux coagulées sont amenées par les moyens 1 dans la cuve 12 en partie inférieure de celle-ci en transitant par le tube 2. Du floculant et du lest sont amenés via le tube 2 dans la partie inférieure de la cuve 12 respectivement par les moyens 5 et 6 . Dans cette partie inférieure, le mouvement rotatif des pales 16 permet de mélanger intimement les eaux coagulées, le lest et le floculant. Ce mélange et la floculation sont optimisés grâce au guide-flux 17 cylindrique et à l'obstacle statique 18. Ce mélange connaît un mouvement à l'intérieur du guide-flux 17 du haut vers le bas puis à l'extérieur du guide-flux 17 du bas vers le haut comme indiqué par les flèches sur la figure 1.

La vitesse des pales 16 de l'agitateur 13 est conçue de façon telle, qu'entre l'agitateur et le pack lamellaire, le mélange d'eau, de lest et de polymère connaisse une zone de tranquillité propice à la décantation des flocs vers le fond de la cuve. La décantation de ces flocs est accélérée grâce à la présence du lest qu'ils renferment.

Les eaux séparées des flocs transitent ensuite dans le pack lamellaire 10 qui permet de retenir les particules fines qu'elles contiennent n'ayant pas floculé. Les eaux traitées sont ensuite évacuées par les moyens 9 comprenant une goulotte, en partie supérieure de la cuve 12.

Les boues sont quant à elles extraites de la cuve 12 par la canalisation 14 au pied de laquelle de l'air est amenée par les moyens 15. L'air lift créé entraine les boues vers le dispositif de séparation 20 et permet d'amorcer la séparation du lest du reste des boues. Cette séparation est achevée dans le dispositif 20. Le lest nettoyé est réintroduit par la canalisation 8 dans la cuve 12 du dispositif 11 et les boues sont extraites par la goulotte 20d vers un traitement spécifique.

## Revendications

1. Installation pour le traitement des eaux comprenant :
des moyens d'amenée (1) d'eau préalablement coagulées à traiter,
un dispositif de floculation-décantation (11) pourvu de moyens de distribution (5) d'au moins un réactif floculant, de moyens de distribution (6) d'au moins un lest, de moyens d'extraction de boues de décantation (20d),
des moyens d'évacuation (9) d'eau traitée,
des moyens de séparation (14) dudit lest contenu dans les boues lestées, et
des moyens de recyclage (8) dudit lest ainsi nettoyé vers ledit dispositif de floculation-décantation (11),
**caractérisée en ce que** :
ledit dispositif de floculation-décantation (11) comprend une cuve unique (12) dans la partie inférieure de laquelle est disposé un agitateur (13) comprenant des pales (16) montées rotative sur un axe vertical (19) et un guide-flux (17) cylindrique disposé autour desdites pales (16);
ladite cuve unique (2) est pourvue dans sa partie supérieure de lamelles (10);
lesdites lamelles sont séparées dudit agitateur (13) d'une distance « d » entre le plan horizontal accueillant le bord inférieur des lamelles et le plan horizontal accueillant la partie supérieure dudit guide-flux (17) et comprise entre environ 0.5 mètre et environ 3 mètres.

2. Installation selon la revendication 1 **caractérisée en ce que** ledit lest présente une densité réelle supérieure à 2,3 tonnes par mètre cube et est préférentiellement choisi parmi le sable, l'ilménite et le grenat.

3. Installation selon la revendication 1 ou 2, **caractérisée en ce que** lesdits moyens de séparation dudit lest contenu dans lesdites boues lestées incluent une pompe et un dispositif de séparation.

4. Installation selon la revendication 1 ou 2, **caractérisée en ce que** lesdits moyens de séparation (14) dudit lest contenu dans lesdites boues lestées incluent des moyens d'injection d'air (15) dans lesdites boues lestées et un dispositif de séparation (20).

5. Installation selon l'une des revendications 3 ou 4 **caractérisée en ce que** ledit dispositif de séparation (20) inclut un mélangeur à pales (20a) associé à un décanteur (20b).

6. Installation selon l'une des revendications des revendications 1 à 5 **caractérisé en ce que** ledit agitateur comprend de plus un obstacle statique (18) globalement centré autour dudit axe dans le prolongement de l'agitateur, ledit obstacle statique (18) ayant une surface externe présentant, dans un plan passant par l'axe, une dimension transversale externe qui croit lorsque l'on s'éloigne des pales (16) parallèlement audit axe (13), avec une pente par rapport à cet axe qui est constante ou croissante.

7. Installation selon l'une des revendications 1 à 5 **caractérisée en ce que** lesdites lamelles sont organisées en un pack lamellaire dont la hauteur H est comprise entre 0,3 mètre et 1,4 mètre

8. Procédé de traitement d'eaux mettant en oeuvre une installation selon l'une quelconque des revendications 1 à 7, ledit procédé comprenant une étape d'amenée d'eaux préalablement coagulées, une étape de floculation lestée, une étape de décantation et une étape de séparation et de recyclage du lest vers ladite étape de floculation lestée, **caractérisé en ce que** ladite étape de floculation lestée et ladite étape de décantation sont effectuées dans la cuve unique dudit dispositif de floculation-décantation de ladite installation.

9. Procédé selon la revendication 8 **caractérisé en ce qu'**il comprend les étapes selon lesquelles :
un floculant et un lest sont ajoutés aux eaux préalablement coagulées au sein de la cuve unique ;
les eaux coagulées, le lest et le floculant sont mélangés dans la partie inférieure de la cuve unique équipée de l'agitateur;
une zone tranquille non agitée est ménagée dans la partie supérieure de la cuve unique, entre l'agitateur et le pack lamellaire, zone propice à la décantation des flocs formés;
les eaux traitées sont évacuées par lesdits moyens d'évacuation d'eau traitée prévus dans la partie haute de ladite cuve après avoir transité par lesdites lamelles ;
les boues lestées sont évacuées par lesdits moyens d'évacuation de boues lestées ; et,
de l'air est injecté dans lesdites boues lestées de façon à en extraire le lest qu'elles contiennent et à le nettoyer sans hydrocyclonage ;
le lest nettoyé est recyclé vers la cuve unique et les boues de décantation sont extraites.

10. Procédé selon la revendication 9, **caractérisé en ce que** le temps de séjour des eaux à l'intérieur de ladite cuve unique est compris entre 2 minutes et 30 minutes.

## Patentansprüche

1. Wasserbehandlungsanlage, umfassend:
Zufuhrmittel (1) von zuvor koaguliertem Wasser, das zu behandeln ist,
eine Flockungs-Dekantierungs-Vorrichtung (11), die mit Verteilungsmitteln (5) von mindestens einem Flockungsreagenz, Verteilungsmitteln (6) von mindestens einer Ballastmasse und Extraktionsmitteln (20d) von Dekantierungsschlamm versehen ist,
Evakuierungsmittel (9) von behandeltem Wasser,
Trennmittel (14) der genannten Ballastmasse, die in dem Ballastschlamm enthalten ist, und
Rückführmittel (8) der so gereinigten genannten Ballastmasse zu der Flockungs-Dekantierens-Vorrichtung (11),
**dadurch gekennzeichnet, dass**
die genannte Flockungs-Dekantierungs-Vorrichtung (11) einen einzigen Behälter (12) umfasst, in dessen unterem Teil ein Rührwerk (13) angeordnet ist, das Schaufeln (16) umfasst, die drehbar auf einer vertikalen Achse (19) montiert sind, und ein zylindrischen Flussleiter (17), der um die genannten Schaufeln (16) angeordnet ist;
wobei der einzige Behälter (2) in seinem oberen Teil mit Lamellen (10) versehen ist;
wobei die genannten Lamellen von dem genannten Rührwerk (13) getrennt sind um eine Distanz "d" zwischen der horizontalen Ebene, die den unteren Rand der Lamellen aufnimmt, und der horizontalen Ebene, die den oberen Teil des genannten Flussleiters (17) aufnimmt, und welche zwischen 0,5 Meter und ungefähr 3 Meter beträgt.

2. Anlage nach Anspruch 1, **dadurch gekennzeichnet, dass** die genannte Ballastmasse eine reale Dichte von mehr als 2,3 Tonnen pro Kubikmeter aufweist und vorzugsweise aus Sand, Ilmenit und Granat ausgewählt ist.

3. Anlage nach Anspruch 1 oder 2, **dadurch gekennzeichnet, dass** die genannten Trennmittel der genannten Ballastmasse, die in dem genannten Ballastschlamm enthalten ist, eine Pumpe und eine Trennvorrichtung aufweisen.

4. Anlage nach Anspruch 1 oder 2, **dadurch gekennzeichnet, dass** die genannten Trennmittel (14) der genannten Ballastmasse, die in dem genannten Ballastschlamm enthalten ist, Lufteinspritzmittel (15) in die genannte Ballastmasse und eine Trennvorrichtung (20) aufweisen.

5. Anlage nach einem der Ansprüche 3 oder 4, **dadurch gekennzeichnet, dass** die genannte Trennvorrichtung (20) einen Schaufelmischer (20a) aufweist, der mit einem Dekantierer (20b) assoziiert ist.

6. Anlage nach einem der Ansprüche 1 bis 5, **dadurch gekennzeichnet, dass** das genannte Rührwerk außerdem ein statisches Hindernis (18) aufweist, das global um die genannte Achse in der Verlängerung des Rührwerks zentriert ist, wobei das genannte statische Hindernis (18) eine Außenfläche aufweist, die, in einer durch die Achse hindurchgehenden Ebene, eine äußere Querabmessung aufweist, die mit zunehmendem Abstand von den Schaufeln (16) parallel zu der genannten Achse (13) zunimmt, mit einer Steigung in Bezug auf diese Achse, die konstant oder zunehmend ist.

7. Anlage nach einem der Ansprüche 1 bis 5, **dadurch gekennzeichnet, dass** die genannten Lamellen in einem lamellaren Satz organisiert sind, dessen Höhe H zwischen 0,3 Meter und 1,4 Meter beträgt.

8. Verfahren zur Wasserbehandlung, bei welchem eine Anlage nach einem der Ansprüche 1 bis 7 verwendet wird, wobei das genannte Verfahren einen Schritt zum Zuführen von zuvor koaguliertem Wasser, einen Schritt zum Ballastflocken, einen Schritt zum Dekantieren und einen Schritt zum Trennen und Rückführen der Ballastmasse zu dem genannten Ballastflockungsschritt umfasst, **dadurch gekennzeichnet, dass** der genannte Ballastflockungsschritt und der genannte Dekantierungsschritt in dem einzigen Behälter der genannten Flockungs-Dekantierungs-Vorrichtung der genannten Anlage durchgeführt werden.

9. Verfahren nach Anspruch 8, **dadurch gekennzeichnet, dass** es die Schritte umfasst, gemäß denen:
ein Flockungsmittel und eine Ballastmasse zuvor koaguliertem Wasser im Inneren des einzigen Behälters zugegeben werden;
das koagulierte Wasser, die Ballastmasse und das Flockungsmittel in dem unteren Teil des einzigen Behälters gemischt werden, der mit einem Rührwerk ausgestattet ist;
eine nicht gerührte Ruhezone in dem oberen Teil des einzigen Behälters aufgenommen ist, zwischen dem Rührwerk und dem Lamellensatz, wobei die Zone für die Dekantierung der gebildeten Flocken geeignet ist;
das behandelte Wasser durch die genannten Evakuierungsmittel von behandeltem Wasser evakuiert wird, die in dem oberen Teil des genannten Behälters bereitgestellt sind, nachdem es durch die Lamellen hindurchgegangen ist;
der Ballastschlamm durch die genannten Evakuierungsmittel von Ballastschlamm evakuiert wird; und
Luft in den genannten Ballastschlamm eingespritzt wird, um die Ballastmasse daraus zu extrahieren, die er enthält, und um sie ohne Hydrozyklonieren zu reinigen;
die gereinigte Ballastmasse zu dem einzigen Behälter zurückgeführt wird und der Dekantierungsschlamm extrahiert wird.

10. Verfahren nach Anspruch 9, **dadurch gekennzeichnet, dass** die Verweilzeit des Wassers im Inneren des genannten einzigen Behälters zwischen 2 Minuten und 30 Minuten beträgt.

## Claims

1. Water treatment installation comprising:
means for carrying (1) water to be treated coagulated beforehand,
a flocculation-decantation device (11) provided with means for distributing (5) at least one flocculant reagent, means for distributing (6) at least one ballast, means for extracting decantation sludge (20d),
means for removing (9) treated water,
means for separating (14) of said ballast contained in the ballasted sludge, and
means for recycling (8) of said ballast cleaned as such to said flocculation-decantation device (11),
**characterised in that:**
said flocculation-decantation device (11) comprises a single tank (12) in the lower portion of which a stirrer (13) is arranged comprising blades (16) rotatably mounted on a vertical axis (19) and a cylindrical flow guide (17) arranged around said blades (16);
said single tank (2) is provided in its upper portion with lamellae (10);
said lamellae are separated from said stirrer (13) by a distance "d" between the horizontal plane receiving the lower end of the lamellae and the horizontal plane receiving the upper portion of the cylindrical flow guide (17) and comprised between about 0.5 metres and about 3 metres.

2. Installation according to claim 1 **characterised in that** said ballast has an actual density greater than 2.3 tonnes per cubic metre and is preferably chosen from sand, ilmenite and garnet.

3. Installation according to claim 1 or 2, **characterised in that** said means for separating of said ballast contained in said ballasted sludge include a pump and a device for separating.

4. Installation according to claim 1 or 2, **characterised in that** said means for separating (14) of said ballast contained in said ballasted sludge include means for injecting air (15) into said ballasted sludge and a device for separating (20).

5. Installation according to one of claims 3 or 4 **characterised in that** said device for separating (20) includes a blade mixer (20a) associated with a decanter (20b).

6. Installation according to claim 1 to 5 **characterised in that** said stirrer in addition comprises a static obstacle (18) globally centred about said axis in the extension of the stirrer, said static obstacle (18) having an outer surface that has, in a plane passing through the axis, an outer transverse dimension that increases when moving away from the blades (16) parallel to said axis (13), with a slope with respect to this axis which is constant or increasing.

7. Installation according to one of claims 1 to 5 **characterised in that** said lamellae are organised into a lamellar pack of which the height H is between 0.3 metres and 1.4 metres.

8. Method for treating water implementing an installation according to any of claims 1 to 7, said method comprising a step of carrying water coagulated beforehand, a step of ballasted flocculation, a step of decanting and a step of separating and of recycling ballast to said step of ballasted flocculation,
**characterised in that** said step of ballasted flocculation and said step of decanting are carried out in the single tank of said flocculation-decantation device of said installation.

9. Method according to claim 8 **characterised in that** it comprises the steps according to which:
a flocculant and a ballast are added to the water coagulated beforehand in the single tank;
the coagulated water, the ballast and the flocculant are mixed in the lower portion of the single tank provided with the stirrer;
a tranquil non-stirred zone is arranged in the upper portion of the single tank, between the stirrer and the lamellar pack, zone propitious to the decantation of the floc formed;
the treated water is removed by the means of removing treated water provided in the upper portion of said tank after having transited through said lamellae;
the ballasted sludge is removed by said means for removing ballasted sludge; and,
air is injected into said ballasted sludge in such a way as to extract therefrom the ballast that it contains and to clean it without hydrocycloning;
the cleaned ballast is recycled to the single tank and the decantation sludge is extracted.

10. Method according to claim 9, **characterised in that** the residence time of the water inside said single tank is between 2 minutes and 30 minutes.
